# EUROPEAN PATENT APPLICATION

(11) **EP 4 491 414 A1**
(43) Date of publication of application: **15.01.2025**
(21) Application number: 24186714.2
(22) Date of filing: 05.07.2024
(51) Int. Cl.: B60C 1/00, C08L 9/06

(54) **WINTER TREAD COMPOSITION INCLUDING ALUMINUM HYDROXIDE**

(30) Priority: 10.07.2023 US 202318349489
(71) Applicant: The Goodyear Tire & Rubber Company, Akron, OH 44316 (US)
(72) Inventor: DELVILLE, Jerome, F54430 Rehon (FR); KAES, Christian, L-9184 Schrondweiler (LU); BEOT, Xavier Jean-Francois, B-6700 Heinsch (BE); MOIA, Robin, L-3352 Leudelange (LU)
(74) Representative: Kutsch, Bernd

(57) **Abstract**

A rubber composition is disclosed comprising, expressed as parts by weight per hundred parts of rubber (phr): 100 phr of an elastomer component, the elastomer component comprising a polybutadiene rubber and a styrene butadiene rubber; a filler component comprising at least 10 phr aluminum hydroxide, at least 70 phr silica and 0 to 20 phr carbon black; an organosilane coupling agent; one or more processing aids selected from the group consisting of a liquid plasticizer, a wax, a resin and mixtures thereof; and a cure package comprising a sulfur-based curing agent, an activator selected from inorganic activators, organic activators, and combinations thereof, and a cure accelerator. Also, tire tread and a tire is disclosed comprising or formed from such a rubber composition.

## Description

### FIELD

The invention relates to a rubber composition which includes aluminum hydroxide, a method of making it, and a tire tread formed from the rubber composition. The composition finds particular application in providing improved wet handling performance without a significant loss in dry handling performance, and in snow.

### BACKGROUND

Rubber compositions for forming tires typically include a blend of elastomers and one or more reinforcing fillers, such as silica and carbon black, a vulcanizing agent, such as sulfur, and various other additives, such as cure activators, cure accelerators, and plasticizers. There is often a tradeoff in performance characteristics when carbon black is partially replaced with silica. For example, JP-2015-227423 A (issued as JP-63-29003 B2) notes that improvements in wet grip performance achieved by replacing some of the carbon black with silica are accompanied by lowering of the wear resistance of the rubber composition. A rubber composition which includes magnesium hydroxide and aluminum oxide is proposed for addressing this problem.

Other compositions using aluminum hydroxide are known. WO 2019/155798 A1 describes a tire rubber composition including a modified styrene butadiene rubber (SBR) having a functional group that interacts with a filler such as silica, and an isoprene rubber, and/or a butyl rubber. In addition to silica, the rubber composition may contain an inorganic filler such as calcium carbonate, talc, alumina, clay, aluminum hydroxide, or mica. U.S. Pat. No. 7,718,717 describes a rubber composition including a diene elastomer, a reinforcing filler, and a coupling agent. The filler includes a synthetic metal hydroxide such as aluminum, iron, or magnesium hydroxide, which is covered with silica.

Others have proposed using hydrated silicates in rubber compositions. For example, U.S. Pat. No. 10,124,627 B2 discloses a tire with a foam rubber layer including ethylene-vinyl alcohol copolymer fibers coated with a polyolefin-based resin and including an inorganic compound powder such as a hydrated aluminosilicate.

One problem with metal hydroxide-containing rubber compositions is that it is difficult to achieve good tire performance over a range of weather conditions, such as in wet, dry and snow conditions.

### SUMMARY OF THE INVENTION

The invention relates to a rubber composition in accordance with claim 1, to tire tread in accordance with claim 12, to a tire in accordance with claim 13, and to a method in accordance with claim 14.

Dependent claims refer to preferred embodiments of the invention.

### DETAILED DESCRIPTION OF PREFERRED EMBODIMENTS OF THE INVENTION

In accordance with one aspect of the exemplary embodiment, a rubber composition includes, expressed as parts by weight per hundred parts of rubber (phr): 100 phr of an elastomer component including a polybutadiene rubber and a styrene butadiene rubber. A filler component includes at least 10 phr aluminum hydroxide, at least 70 phr silica, and 0-20 phr carbon black. The composition further includes an organosilane coupling agent, one or more processing aids, selected from liquid plasticizers, waxes, and resins and a cure package including a sulfur-based curing agent, an activator selected from inorganic activators, organic activators, and combinations, and a cure accelerator.

In various preferred aspects of this embodiment:
The polybutadiene rubber is at least 30 phr.

The styrene butadiene rubber is at least 50 phr.

A ratio by weight of polybutadiene rubber to styrene butadiene rubber is from 1:1 to 1:3, or up to 1:2.

The aluminum hydroxide is up to 20 phr.

The carbon black is at least 5 phr.

The organosilane coupling agent is at least 0.1 phr, or at least 1 phr, or at least 2 phr, or at least 5 phr, or at least 8 phr, or up to 20 phr, or up to 12 phr, or up to 10 phr.

A ratio by weight of the organosilane coupling agent to silica is at least 0.1:100, or up to 20:100, or at least 1:100, or at least 6:100, or up to 15:100, or up to 12:100.

The organosilane coupling agent includes at least one bis-[3-(trialkoxysilyl)organyl]polysulfide.

The liquid plasticizer comprises at least 10 phr, or at least 20 phr of an oil.

The resin is at least 2 phr, or at least 5 phr, or up to 20 phr, or up to 15 phr, or up to 12 phr.

The resin includes an alpha-methylstyrene resin.

The resin is at least 2 phr, or at least 5 phr, or up to 15 phr, or up to 12 phr.

The sulfur-based curing agent is at least 0.1 phr, or at least 0.5 phr, or at least 1 phr, or up to 10 phr, or up to 8 phr, or up to 5 phr, or up to 2 phr.

The inorganic activator includes zinc oxide and/or the organic activator includes a fatty acid.

In another preferred aspect, a tire tread includes or is formed from the rubber composition in any of the aspects described above.

In another preferred aspect, a passenger vehicle tire may include the tire tread.

In accordance with another exemplary embodiment, a method of forming a tire tread includes forming a rubber composition by blending together 100 phr of an elastomer component, the elastomer component including a polybutadiene rubber, and a styrene butadiene rubber; a filler component including at least 10 phr aluminum hydroxide, at least 70 phr silica, and 0-20 phr carbon black; an organosilane coupling agent; one or more processing aids, selected from a liquid plasticizer, a wax, a resin, and mixtures thereof; and a cure package including a sulfur-based curing agent, an activator selected from inorganic activators, organic activators, and combinations thereof, and a cure accelerator; and curing the rubber composition to form the tire tread.

In accordance with another exemplary embodiment, a rubber composition includes, expressed as parts by weight per hundred parts of rubber (phr): 100 phr of an elastomer component, the elastomer component including 30-50 phr of a polybutadiene rubber and 50-70 phr of a styrene butadiene rubber; 10-20 phr of aluminum hydroxide; 70-130 phr of silica; 0-20 phr of carbon black; 3-20 phr of an organosilane coupling agent; 10-85 phr of processing oil; 0-5 phr of wax; 2-15 phr of resin; 0.8-4 phr of a sulfur-based curing agent, 1-8 phr of zinc oxide; 0-8 phr of fatty acid; and 1-6 phr of a cure accelerator.

In accordance with one exemplary embodiment, a tire tread formed from a rubber composition is provided. The rubber composition includes, expressed as parts by weight per hundred parts of rubber (phr): 100 phr of an elastomer component, the elastomer component comprising 30-50 phr of a polybutadiene rubber, and 50-70 phr of a styrene butadiene rubber; 10-20 phr of aluminum hydroxide; 70-130 phr of silica; 0-20 phr of carbon black; 3-20 phr of an organosilane coupling agent; 10-85 phr of oil; 0-5 phr of wax;2-20 phr of resin; 0.8-4 phr of a sulfur-based curing agent, 1-8 phr of zinc oxide; 2-20 phr of fatty acid; and 1-6 phr of a cure accelerator.

A rubber composition suited to use in a forming a vehicle tire tread for winter use includes a mixture of elastomers and a filler component that includes aluminum hydroxide.

The presence of aluminum hydroxide in a rubber composition as described herein yields comparable dry handling performance while wet handling performance is improved. In snow conditions, as evaluated by friction measurements, comparable or better performance is achieved.

The terms "rubber" and "elastomer" may be used interchangeably unless otherwise indicated. The terms "cure" and "vulcanize" may be used interchangeably unless otherwise indicated.

As used herein, the term "phr" means parts per one hundred parts rubber by weight of rubber. In general, using this convention, a rubber composition includes, in total, 100 parts by weight of rubber/elastomer. The claimed composition may include other rubbers/elastomers than explicitly mentioned in the claims, provided that the phr value of the claimed rubbers/elastomers is in accordance with claimed phr ranges and the amount of all rubbers/elastomers in the composition results in 100 parts of rubber, in total.

The term "phf" refers to parts per one hundred parts of filler, by weight.

As used herein, Mooney viscosity (ML 1+4) is measured in M.U. at 100°C according to ASTM D1646-19a, "Standard Test Methods for Rubber-Viscosity, Stress Relaxation, and Pre-Vulcanization Characteristics (Mooney Viscometer)."

The glass transition temperature (Tg) of an elastomer or elastomer composition, where referred to herein, represents the glass transition temperature(s) of the respective elastomer or elastomer composition in its uncured state or possibly a cured state in the case of an elastomer composition. Tg values referred to herein are determined as a peak midpoint by a differential scanning calorimeter (DSC) at a temperature rate of increase of 10° C per minute, according to ASTM D3418-21, "Standard Test Method for Transition Temperatures and Enthalpies of Fusion and Crystallization of Polymers by Differential Scanning Calorimetry."

As used herein, the term "tread," refers to both the portion of a tire that comes into contact with the road under normal inflation and load as well as any subtread, unless otherwise indicated.

An exemplary tire tread is formed from a vulcanizable rubber composition including:
1) 100 parts of an elastomer component, the elastomer component including a) polybutadiene (PBD) rubber, b) a styrene butadiene rubber (SBR), and optionally one or more additional elastomers;
2) a filler component including a) aluminum hydroxide, b) silica, and optionally c) carbon black;
3) an organosilane coupling agent;
4) one or more processing aids, selected from a) a liquid plasticizer, such as an oil, b) a wax, c) a resin, and mixtures thereof; and
5) a cure package including a) a sulfur-based curing agent; b) an activator selected from inorganic activators, such as zinc oxide, organic activators, such as fatty acids, and combinations thereof, and c) a cure accelerator.

Other components which may be used in the rubber composition include antidegradants, peptizers, cure retardants, and the like.

Components of the rubber composition may be as follows:

### 1. The Elastomer Component

The elastomers used in the rubber composition include a polybutadiene rubber and a styrene-butadiene rubber. These elastomers may be used in a weight ratio of polybutadiene: styrene-butadiene of from 1:1 to 1:3, or up to 1:2. In total, the polybutadiene rubber and a styrene-butadiene rubber may amount to at least 80 phr, or at least 90 phr, or at least 95 phr, or up to 100 phr. In one embodiment, one or more of the elastomers used in the rubber composition may be partially hydrogenated.

### a) The Polybutadiene

The polybutadiene rubber may be predominantly a *cis*-1,4-polybutadiene. The PBD may have at least a 90 wt. % *cis*-1,4-microstructure content ("high cis" content), a glass transition temperature (Tg) in a range of from -95 to -110 °C, and a Mooney viscosity of 40-65 M.U.

Polybutadiene rubbers may be prepared, for example, by organic solution polymerization of 1,3-butadiene. Suitable polybutadiene rubbers are available commercially, such as Budene^{®} 1207, Budene^{®} 1208, Budene^{®} 1223, or Budene^{®} 1280 from The Goodyear Tire & Rubber Company. These high *cis*-1,4-polybutadiene rubbers can be synthesized utilizing nickel catalyst systems which include a mixture of (1) an organonickel compound, (2) an organoaluminum compound, and (3) a fluorine containing compound as described, for example, in U.S. Pat. Nos. 5,698,643 and 5,451,646. For example, *cis*-1,4-polybutadiene rubber obtained as Budene^{®} 1207 has a *cis*-1,4-content of at least 96 wt. %, a Mooney viscosity of 55, and a Tg of less than -100 °C. Budene^{®} 1208 polybutadiene rubber has a *cis*-1,4-polybutadiene content of at least 97 wt. %, a Mooney viscosity of 46, and a Tg of less than -100°C. Such commercial elastomers may incorporate a minor amount of a non-staining antioxidant.

In one embodiment, the PBD may be functionalized, e.g., alkoxy-silyl end functionalized.

### b) The Styrene-Butadiene Rubber

The styrene-butadiene rubber (SBR) may be an emulsion polymerized styrene-butadiene rubber (ESBR) or a solution-polymerized styrene-butadiene rubber (SSBR). Mixtures of SBRs are also contemplated. In some embodiments, a precursor for SBR may be used, rather than SBR. As an example, styrene can copolymerize with a butadiene rubber to form an SBR.

The SBR may have a bound styrene content of at least 15 wt. %, or at least 20 wt. %, or up to 50 wt. %, or up to 40 wt. %, or up to 30 wt. %, or up to 25 wt. %.

In one embodiment, the bound styrene content is 15 - 25 wt. %. In another embodiment, an ESBR having a medium to relatively high bound styrene content of 30 to 45 wt. % is used.

For processability, the SBR may be extended with an oil, such as a mineral oil, prior to combining it with the other ingredients of the rubber composition. In one embodiment, a ratio by weight of SBR to extender oil may be at least 2:1 or at least 2:5:1 or up to 5:1, or up to 4:1.

The oil-extended SBR may have a Mooney viscosity ML1+4 @ 100°C of 40-60, or 44-55.

ESBRs can be prepared by copolymerization of styrene and 1,3-butadiene monomers in an aqueous emulsion, e.g., by cold polymerization using mixed rosin acid and fatty acid soaps. SSBRs may be prepared from styrene and 1,3-butadiene monomers with an organolithium catalyzation in the presence of an organic hydrocarbon solvent. In another embodiment, the SSBR is a tin-coupled polymer. The SSBR or ESBR may be functionalized for improved compatibility with silica. In addition, or alternatively, the SSBR is thio-functionalized. This helps to improve stiffness of the compound and/or improve its hysteresis behavior. Thus, for example, the SSBR may be a thio-functionalized, tin-coupled solution polymerized copolymer of butadiene and styrene. Alkoxy-silyl end functionalized solution polymerized SBR may also be used.

An example of a commercially-available oil-extended ESBR is BUNA^{™} SB 1723-Schkopau, obtainable from Dow, which is manufactured by cold polymerization using mixed rosin acid/fatty acid soaps. It is plasticized with 37.5 parts of mineral oil per 100 parts of rubber and has a Mooney viscosity ML1+4 @ 100°C of 49.

### c) Other Elastomers

The elastomers used in the rubber composition may optionally include one or more additional elastomers, e.g., in a total amount of at least 1 phr, or up to 20 phr, or up to 10 phr, or up to 5 phr. Such additional elastomers may be selected from conjugated alkyl dienes, such as 2-methyl-1,3-butadiene, 2,3-di(C1-C5 alkyl)-1,3-butadienes such as, for example, 2,3-dimethyl-1,3-butadiene, 2,3-diethyl-1,3-butadiene, 2-methyl-3-ethyl-1,3-butadiene, 2-methyl-3-isopropyl-1,3-butadiene, 1,3-pentadiene and 2,4-hexadiene.

Other suitable elastomers include those formed from acetylenes, for example, vinyl acetylene, butyl rubber (a copolymer of isobutylene and isoprene), polymers of vinyl compounds, for example, acrylic acid, acrylonitrile (which polymerize with butadiene to form nitrile butadiene rubber, NBR), polymers formed from methacrylic acid, vinyl esters, and various unsaturated aldehydes, ketones and ethers, e.g., acrolein, methyl isopropenyl ketone and vinylethyl ether. Specific examples of other synthetic rubbers include neoprene (polychloroprene), polyisoprene (including *cis* 1,4-polyisoprene), butyl rubber, halobutyl rubber, such as chlorobutyl rubber or bromobutyl rubber, styrene isoprene butadiene rubber (SIBR), copolymers of isoprene with monomers such as styrene, acrylonitrile and methyl methacrylate, copolymers of 1,3-butadiene with monomers such as acrylonitrile and methyl methacrylate, ethylene propylene terpolymers, such as ethylene/propylene/diene monomers (EPDM), and in particular, ethylene/propylene/dicyclopentadiene terpolymers. Additional examples of rubbers which may be used include alkoxy-silyl end functionalized solution polymerized polymers, such as SIBR and isoprene butadiene rubber (IBR), and silicon-coupled and tin-coupled star-branched polymers.

In one embodiment, the additional elastomers include at least one of natural rubber and synthetic polyisoprene. In another embodiment, polybutadiene and styrene-butadiene are the only elastomers used in the rubber composition.

### 2. Filler Component

The filler component includes or consists of the following reinforcing fillers: a) aluminum hydroxide, b) silica, and optionally c) carbon black. In some embodiments, additional fillers may be used. A total filler content of the rubber composition may be 30 to 170 phr, such as 70 - 150 phr. A weight ratio of carbon black to silica may be from 0:100 to 20:100, or at least 5:100, or up to 12:100.

### a) Aluminum Hydroxide

The rubber composition may include at least 8 phr, or at least 10 phr, or at least 12 phr of aluminum hydroxide (Al(OH)₃), or up to 25 phr, or up to 20 phr, or up to 18 phr of aluminum hydroxide. Aluminum hydroxide may be at least 8 phf, or at least 10 phf, or up to 18 phf, or up to 16 phf in the rubber composition.

The BET specific surface area of the reinforcing aluminum hydroxide particles is determined according to ISO 9277:2022(en), "Determination of the specific surface area of solids by gas adsorption - BET method". This document specifies the determination of the overall specific external and internal surface area of either disperse (e.g., nano-powders) or porous, solids by measuring the amount of physically adsorbed gas according to the method of Brunauer, Emmett and Teller method, based on the 2015 International Union for Pure and Applied Chemistry (IUPAC) recommendations.

The average particle size by mass *d_{w}* of the reinforcing aluminum hydroxide particles is determined after ultrasound dispersion of the filler, using an optical detection centrifugal sedimentometer type "DCP" ("Disc Centrifuge Photosedimentometer"), sold by Brookhaven Instruments using the method of ISO 15825:2017, "Rubber compounding ingredients - Carbon black - Determination of aggregate size distribution by disc centrifuge photosedimentometry."

The BET specific surface area of the particulate reinforcing aluminum hydroxide may be at least 50 m²/cm³, or at least 100 m²/cm³, or at least 200 m²/cm³, and may be up to 700 m²/cm³, or up to 600 m²/cm³, or up to 500 m²/cm³. In another embodiment, the aluminum hydroxide may have a BET surface area of 2.0-6.0 m²/g. A density of the aluminum hydroxide may be 2-3 g/cm³ may be used.

Given a particle size distribution, d₅₀ is the median particle size in microns (half of particles have a smaller size and half have a greater particle size). The d₅₀ of the aluminum hydroxide may be 0.5-2 microns, the d₁₀ may be 0.4-0.8 microns.

The average particle size by mass *d_{w}* of the reinforcing aluminum hydroxide may be at least 20 nm, or at least 50 nm, or at least 100 nm and may be up to 400 nm, or up to 300 nm, or up to 200 nm.

For example, Al(OH)₃ obtained as Hydral^{™} 710 from Huber, with d₅₀ = 1.1 microns, d₁₀ = 0.7 microns, density = 2.42 g/cm³ may be used.

### b) Silica

The rubber composition may include at least 20 phr, or at least 40 phr, or at least 60 phr, or at least 70 phr, or at least 80 phr, or at least 90 phr of silica, or up to 140 phr, or up to 130 phr, or up to 120 phr, or up to 110 phr of silica. Silica may be at least 60 phf, or at least 70 phf, or up to 90 phf, or up to 85 phf in the rubber composition.

The silica may be amorphous (e.g., precipitated) silica and/or crystalline silica. The term "silica" is used herein to refer to silicon dioxide, SiOz (which may contain minor amounts of impurities, generally less than 1 wt. %, resulting from the process in which the silica is formed). The term "precipitated silica" is used to refer to synthetic amorphous silica, typically obtained by a process in which a silicate is precipitated with an acidifying agent.

The silica may be prepared by various methods. Precipitated silica may be prepared by digesting amorphous silica, e.g., found in rice husks or other biological wastes, with sodium hydroxide to form sodium silicate and then precipitating silica from the sodium silicate by reaction with an acidifying agent, such as sulfuric acid or carbon dioxide. The resulting silica precipitate is washed and filtered. Methods for the preparation of precipitated silica are disclosed, for example, in U.S. Pat. Nos. 5,587,416 A, 5,800,608 A, 5,882,617 A, and 9,359,215 B2, and U.S. Pub. Nos. 20020081247 A1, and 20050032965 A1. Precipitated silica may also be formed from silica gel as described, for example, in U.S. Pat. Nos. 5,708,069, and 5,789,514. Silica gels may be derived, for example, by hydrophobating a silica hydrogel with, for example, an organomercaptosilane and alkyl silane and drying the product.

The surface area of silica can be measured in various ways. One method is through nitrogen adsorption in accordance with ASTM D1993-18, "Standard Test Method for Precipitated Silica-Surface Area by Multipoint BET Nitrogen Adsorption," which is referred to herein as the nitrogen surface area. Another method is in accordance ASTM D6845-20, "Standard Test Method for Silica, Precipitated, Hydrated-CTAB (Cetyltrimethylammonium Bromide) Surface Area," which is referred to herein as the CTAB surface area. The CTAB molecule is relatively large, so it is not adsorbed in micropores or on surface roughness. Thus, the CTAB surface area reflects only the surface of the silica that is available for interaction with rubber molecules.

In an exemplary embodiment, the silica has a CTAB surface area of at least 120 m²/g, or at least 140 m²/g, or at least 200 m²/g, or up to 350 m²/g, or up to 300 m²/g.

Examples of such precipitated silicas include Hi-Sil^{™} 532, Hi-Sil^{™} 532 EP, and Hi-Sil^{™} EZ 160G from PPG Industries; Hubersil^{™} 4155 from the J. M. Huber Company; Zeosil^{™}, under the designations 115GR, 125GR, 165GR, 175GR, 185GR, 195GR, 1085GR, 1165MP, 1115MP, HRS 1200MP, Premium MP, Premium 200MP, Premium SW, and 195HR from Solvay; Ultrasil^{™}, under the designations VN2, VN3, VN3GR, 5000GR, 7000GR, 9000GR from Evonik; Zeopol^{™}, under the designations 8755LS and 8745 from Evonik; Newsil^{™}, under the designations 115GR and 2000MP, from Wuxi Quechen Silicon Chemical Co., Ltd; and Tokusil^{™} 315 from Maruo Calcium Co., Ltd.

For example, a precipitated amorphous silica having a BET nitrogen surface area of about 165 m²/g and a CTAB surface area of about 160 m²/g, obtained as Zeosil^{™} 1165 MP from Solvay, may be used.

The silica may have been surface treated, e.g., with a coupling agent and/or a polyalkylene oxide, such as polyethylene glycol, prior to incorporating the pretreated silica into the rubber composition to enhance dispersion and/or adherence to the elastomers. In another embodiment, the silica may be treated with the coupling agent and/or polyalkylene oxide *in situ,* within the rubber composition, e.g., prior to addition of the curing agent(s). Exemplary coupling agents are described below.

### c) Carbon Black

Carbon black filler, when used in the tread rubber composition, may be at least 1 phr, or at least 2 phr, or at least 5 phr, or up to 20 phr, or up to 16 phr, or up to 12 phr, or up to 10 phr. Carbon black may be at least 2 phf, or at least 4 phf, or up to 10 phf, or up to 8 phf in the rubber composition.

In some embodiments carbon black filler serves as a reinforcing filler, while in other embodiments, it serves as a non-reinforcing carbon black filler. Suitable carbon black reinforcing fillers in the rubber composition may include those having a surface area of at least 20 m²/g, or at least 35 m²/g, or up to 200 m²/g, or higher, as determined by ASTM D-1765-21, "Standard Classification System for Carbon Blacks Used in Rubber Products," using the cetyltrimethyl-ammonium bromide (CTAB) technique. Example carbon blacks include furnace black, channel blacks, and lamp blacks. Specific examples of useful carbon blacks include super abrasion furnace (SAF) blacks, high abrasion furnace (HAF) blacks, fast extrusion furnace (FEF) blacks, fine furnace (FF) blacks, intermediate super abrasion furnace (ISAF) blacks, semi-reinforcing furnace (SRF) blacks, medium processing channel blacks, hard processing channel blacks and conducting channel blacks. Other carbon blacks which can be utilized include acetylene blacks. In certain embodiments, the rubber composition includes a mixture of two or more of the carbon blacks. The carbon blacks utilized can be in pelletized form or an unpelletized flocculent mass. For more uniform mixing, unpelletized carbon black is more suitable.

Exemplary carbon blacks include those with ASTM designations N110, N121, N134, N220, N231, N234, N242, N293, N299, N315, N326, N330, N332, N339, N343, N347, N351, N358, N375, N539, N550, N582, N630, N642, N650, N660, N683, N754, N762, N765, N774, N787, N907, N908, N990, and N991, as specified by ASTM D1765-21, "Standard Classification System for Carbon Blacks Used in Rubber Products."

### d) Other Reinforcing Fillers

Reinforcing filler other than aluminum hydroxide, carbon black, and silica may be utilized in the rubber composition, e.g., in amounts of up to 10 phr, or up to 5 phr. Examples of such additional reinforcing fillers include alumina, clay (reinforcing grades), magnesium hydroxide, boron nitride, aluminum nitride, titanium dioxide, reinforcing zinc oxide, and combinations thereof.

### 3. Coupling agent

The rubber composition may include at least 0.1 phr of the coupling agent, or at least 1 phr, or at least 2 phr, or at least 5 phr, or at least 8 phr, or up to 20 phr, or up to 12 phr, or up to 10 phr of the coupling agent(s).

Alternatively, or additionally, the coupling agent may be present in an amount sufficient to provide a ratio of the total amount of coupling agent to silica filler of at least 0.1:100, or up to 20:100, by weight, e.g., a ratio of at least 1:100, or at least 6:100, or up to 15:100, or up to 12:100.

The coupling agent generally includes a first moiety that is reactive with hydroxyl groups (e.g., silanol groups) that are present on the surface of precipitated silica and a second moiety capable of reacting with a diene-based elastomer, such as the exemplary PBD and SBR. The two moieties are connected by a linking group, e.g., a hydrocarbyl and/or sulfidic bridge, such that the precipitated silica is chemically bonded to the elastomer. The first and second moieties may be the same or different. Organosilanes are commonly used coupling agents. The organosilane is generally one which increases the hydrophobic character of silica particles, making them more dispersible in the elastomers while also serving to form links between silica particles and the elastomers.

Examples of organosilane coupling agents include those containing groups such as alkyl, alkoxy, mercapto, blocked mercapto, sulfide (e.g., monosulfide-based alkoxy-containing, disulfide-based alkoxy-containing, tetrasulfide-based alkoxy-containing), amino, vinyl, epoxy, and combinations thereof.

Exemplary alkylsilanes may be halogenated, alkoxylated, and or/contain polysulfide groups. Example organosilanes are described, for example, in U.S. Pat. Nos. 4,474,908, 5,780,535, 5,780,538, 5,827,912, 6,005,027, 6,121,347, 6,136,913, 6,573,324, 6,608,145B1, 8,003,724, 8,440,750B2, 9,074,073, 10,947,369B2, and 11,440,877, and U.S. Pub. No. 20220204351.

In one embodiment, the organosilane coupling agent is an alkyl alkoxysilane having the general formula (R¹)ₚSi(OR²)₄₋ₚ where each R¹ is independently a C₁ to C₂₀ aliphatic (or C₆ to C₁₅ aliphatic, or C₈ to C₁₄ aliphatic), C₅ to C₂₀ cycloaliphatic, or C₆ to C₂₀ aromatic group, with the proviso that at least one R¹ is an alkyl group. Each R² is independently a monovalent organic group, such as a C₁ to C₆ aliphatic group. p is an integer from 1 to 3, e.g., 1.

Examples of alkyl alkoxysilanes suitable for use include octyltriethoxysilane, octyltrimethoxysilane, trimethylethoxysilane, cyclohexyltriethoxysilane, isobutyltriethoxy-silane, ethyltrimethoxysilane, cyclohexyl-tributoxysilane, dimethyldiethoxysilane, methyltriethoxysilane, propyltriethoxysilane, hexyltriethoxysilane, heptyltriethoxysilane, nonyltriethoxysilane, decyltriethoxysilane, dodecyltriethoxysilane, tetradecyltriethoxysilane, octadecyltriethoxysilane, methyloctyldiethoxysilane, dimethyldimethoxysilane, methyltrimethoxysilane, propyltrimethoxysilane, hexyltrimethoxysilane, heptyltrimethoxysilane, nonyltrimethoxysilane, decyltrimethoxysilane, dodecyltrimethoxysilane, tetradecyltrimethoxysilane, octadecyl-trimethoxysilane, methyloctyl dimethoxysilane, and mixtures thereof.

In another embodiment, the organosilane is a bis(trialkoxysilylorgano)polysulfide, in which one or two of the alkoxy groups is/are optionally replaced with a phenoxy group. Examples of bis(trialkoxysilylorgano) polysulfides include bis(trialkoxysilylorgano)disulfides and bis(trialkoxysilylorgano)tetrasulfides. Specific examples of bis(trialkoxysilylorgano)disulfides include 3,3'-bis(triethoxysilylpropyl) disulfide, 3,3'-bis(trimethoxysilylpropyl)disulfide, 3,3'-bis(tributoxysilylpropyl)disulfide, 3,3'-bis(tri-t-butoxysilylpropyl)disulfide, 3,3'-bis(trihexoxysilylpropyl)disulfide, 2,2'-bis(dimethylmethoxysilylethyl)disulfide, 3,3'-bis(diphenylcyclohexoxysilylpropyl) disulfide, 3,3'-bis(ethyl-di-sec-butoxysilylpropyl)disulfide, 3,3'-bis(propyldiethoxysilylpropyl)disulfide, 12,12'-bis(triisopropoxysilylpropyl)disulfide, 3,3'-bis(dimethoxyphenylsilyl-2-methylpropyl)disulfide, and mixtures thereof. Examples of bis(trialkoxysilylorgano)tetrasulfide coupling agents include bis(3-triethoxysilylpropyl)tetrasulfide, bis(2-triethoxysilylethyl)tetrasulfide, bis(3-trimethoxysilylpropyl)tetrasulfide, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilyl-N,N-dimethylthiocarbamoyl tetrasulfide, 3-trimethoxysilylpropyl-benzothiazole tetrasulfide, 3-triethoxysilylpropylbenzothiazole tetrasulfide, and mixtures thereof.

Exemplary bis-[3-(trialkoxysilyl)organyl]polysulfides include alkoxy and alkyl groups containing 1-6 or 1-4 carbon atoms and a polysulfide bridge of 2-6 connected sulfur atoms, on average. In particular, bis-[3-(triethoxysilyl)propyl] polysulfides may have an average of from 2 to 2.6 or from 3.5 to 4, connecting sulfur atoms in the polysulfidic bridge. Examples include bis[3-(triethoxysilyl)propyl]tetrasulfide (TESPT), available as Si69^{®} from Evonik Corporation and bis-[3-(triethoxysilyl)propyl]disulfide (TESPD) with an average of 2.15 connecting sulfur atoms in the polysulfidic bridge, available as Si266^{®} from Evonik Corporation. Mixtures of such bis-[3-(triethoxysilyl)propyl] polysulfides may be used.

In another embodiment, the organosilane coupling agent is a mercapto silane having the general formula HS-R³-Si(R⁴)(R⁵)₂, where R³ is a divalent organic group, R⁴ is a halogen atom or an alkoxy group, and each R⁵ is independently a halogen, an alkoxy group, or a monovalent organic group. The halogen is chlorine, bromine, fluorine, or iodine. The alkoxy group may have 1-3 carbon atoms.

Examples of mercapto silanes include 1-mercaptomethyltriethoxysilane, 2-mercaptoethyltriethoxysilane, 3-mercaptopropyltriethoxysilane, 3-mercaptopropylmethyldiethoxysilane, 2-mercaptoethyltripropoxysilane, 18-mercaptooctadecyldiethoxychlorosilane, and mixtures thereof.

In another embodiment, the organosilane coupling agent is a blocked mercapto silane having the general formula B-S-R⁶-Si-X₃ with an available silyl group for reaction with silica in a silica-silane reaction and a blocking group B that replaces the mercapto hydrogen atom to block the reaction of the sulfur atom with the polymer. The blocking group B can be in the form of an unsaturated heteroatom or carbon bound directly to sulfur via a single bond, R⁶ is a C₁ to C₆ linear or branched alkylidene, and each X is independently selected from the group consisting of C₁ to C₄ alkyl and C₁ to C₄ alkoxy.

Examples of blocked mercapto silanes suitable for use include 2-triethoxysilyl-1-ethylthioacetate, 2-trimethoxysilyl-1-ethylthioacetate, 2-(methyldimethoxysilyl)-1-ethylthioacetate, 3-trimethoxysilyl-1-propylthioacetate, triethoxysilylmethyl-thioacetate, trimethoxysilylmethylthioacetate, triisopropoxysilylmethylthioacetate, methyldiethoxysilylmethylthioacetate, methyldimethoxysilylmethylthioacetate, methyldiisopropoxysilylmethylthioacetate, dimethylethoxysilylmethylthioacetate, dimethylmethoxysilylmethylthioacetate, dimethylisopropoxysilylmethylthioacetate, 2-triisopropoxysilyl-1-ethylthioacetate, 2-(methyldiethoxysilyl)-1-ethylthioacetate, 2-(methyldiisopropoxysilyl)-1-ethylthioacetate, 2-(dimethylethoxysilyl-1-ethylthioacetate, 2-(dimethylmethoxysilyl)-1-ethylthioacetate, 2-(dimethylisopropoxysilyl)-1-ethylthioacetate, 3-triethoxysilyl-1-propylthioacetate, 3-triisopropoxysilyl-1-propylthioacetate, 3-methyldiethoxysilyl-1-propyl-thioacetate, 3-methyldimethoxysilyl-1-propylthioacetate, 3-methyldiisopropoxysilyl-1-propylthioacetate, 1-(2-triethoxysilyl-1-ethyl)-4-thioacetylcyclohexane, 1-(2-triethoxysilyl-1-ethyl)-3-thioacetylcyclohexane, 2-triethoxysilyl-5-thioacetylnorbornene, 2-triethoxysilyl-4-thioacetylnorbornene, 2-(2-triethoxysilyl-1-ethyl)-5-thioacetylnorbornene, 2-(2-triethoxy-silyl-1-ethyl)-4-thioacetylnorbornene, 1-(1-oxo-2-thia-5-triethoxysilylphenyl)benzoic acid, 6-triethoxysilyl-1-hexylthioacetate, 1-triethoxysilyl-5-hexylthioacetate, 8-triethoxysilyl-1-octylthioacetate, 1-triethoxysilyl-7-octylthioacetate, 6-triethoxysilyl-1-hexylthioacetate, 1-triethoxysilyl-5-octylthioacetate, 8-trimethoxysilyl-1-octylthioacetate, 1-trimethoxysilyl-7-octylthioacetate, 10-triethoxysilyl-1-decylthioacetate, 1-triethoxysilyl-9-decylthioacetate, 1-triethoxysilyl-2-butylthioacetate, 1-triethoxysilyl-3-butylthioacetate, 1-triethoxysilyl-3-methyl-2-butylthioacetate, 1-triethoxysilyl-3-methyl-3-butylthioacetate, 3-trimethoxysilyl-1-propylthiooctanoate, 3-triethoxysilyl-1-propyl-1-propylthiopalmitate, 3-triethoxysilyl-1-propylthiooctanoate, 3-triethoxysilyl-1-propylthiobenzoate, 3-triethoxysilyl-1-propylthio-2-ethylhexanoate, 3-methyldiacetoxysilyl-1-propylthioacetate, 3-triacetoxysilyl-1-propylthioacetate, 2-methyldiacetoxysilyl-1-ethylthioacetate, 2-triacetoxysilyl-1-ethylthioacetate, 1-methyldiacetoxysilyl-1-ethylthioacetate, 1-triacetoxysilyl-1-ethyl-thioacetate, tris-(3-triethoxysilyl-1-propyl)trithiophosphate, bis-(3-triethoxysilyl-1-propyl)methyldithiophosphonate, bis-(3-triethoxysilyl-1-propyl)ethyldithiophosphonate, 3-triethoxysilyl-1-propyldimethylthiophosphinate, 3-triethoxysilyl-1-propyldiethylthiophosphinate, tris-(3-triethoxysilyl-1-propyl)tetrathiophosphate, bis-(3-triethoxysilyl-1-propyl)methyltrithiophosphonate, bis-(3-triethoxysilyl-1-propyl)ethyltrithiophosphonate, 3-triethoxysilyl-1-propyldimethyldithiophosphinate, 3-triethoxysilyl-1-propyldiethyldithiophosphinate, tris-(3-methyldimethoxysilyl-1-propyl)trithiophosphate, bis-(3-methyldimethoxysilyl-1-propyl)methyldithiophosphonate, bis-(3-methyldimethoxysilyl-1-propyl)-ethyldithiophosphonate, 3-methyldimethoxysilyl-1-propyldimethylthiophosphinate, 3-methyldimethoxysilyl-1-propyldiethylthiophosphinate, 3-triethoxysilyl-1-propylmethylthiosulfate, 3-triethoxysilyl-1-propylmethanethiosulfonate, 3-triethoxysilyl-1-propylethanethiosulfonate, 3-triethoxysilyl-1-propylbenzenethiosulfonate, 3-triethoxysilyl-1-propyltoluenethiosulfonate, 3-triethoxysilyl-1-propylnaphthalenethiosulfonate, 3-triethoxysilyl-1-propylxylenethiosulfonate, triethoxysilylmethylmethylthiosulfate, triethoxysilylmethylmethanethiosulfonate, triethoxysilylmethylethanethiosulfonate, triethoxysilylmethylbenzenethiosulfonate, triethoxysilylmethyltoluenethiosulfonate, triethoxysilylmethylnaphthalenethiosulfonate, triethoxysilylmethylxylenethiosulfonate, and mixtures thereof.

In certain embodiments, the coupling agent can be added to the rubber composition in the form of a pre-treated silica. The pre-treated silica can be one that has been surface treated with the organosilane coupling agent prior to being added to the rubber composition. The use of a pre-treated silica can allow for two ingredients (i.e., silica and coupling agent) to be added as one ingredient, which generally tends to make rubber compounding easier.

In one embodiment, the coupling agent may be supported on a carrier, such as carbon black.

### 4. Processing aids

The rubber composition includes one or more processing aids, selected from a) a liquid plasticizer, b) a wax, c) a resin, d), and mixtures thereof.

### a) Liquid Plasticizer

The rubber composition may include at least 10 phr of liquid plasticizer ((e.g., processing oil), or at least 20 phr, or at least 35 phr, or at least 30 phr, or at least 40 phr, or up to 85 phr, or up to 70 phr, or up to 65 phr, or up to 60phr, or up to 55 phr of liquid plasticizer. The term liquid plasticizer is used to refer to plasticizer ingredients which are liquid at room temperature (i.e., liquid at 25°C and above) and is to be distinguished from hydrocarbon resins, which are generally solid at room temperature. Generally, liquid plasticizers have a Tg that is below 0°C, generally well below, such as less than -30°C, or less than -40°C, or less than -50°C, such as a Tg of 0°C to -100°C.

Suitable liquid plasticizers include oils (e.g., petroleum-derived mineral oils as well as plant-sourced oils) and non-oil liquid plasticizers, such as ether plasticizers, ester plasticizers, phosphate plasticizers, and sulfonate plasticizers. Liquid plasticizer may be added during the compounding process or as an extender oil (e.g., for the ESBR). The term "mineral oil" refers generally to oils produced by distillation of petroleum that are liquid at room temperature. The Tg of such mineral oils may be -40°C to -100°C. Such mineral oils may include aromatic oils, naphthenic oils, oils that are low in polycyclic aromatics (low PCA oils), and mixtures thereof. Plant oils may include oils harvested from vegetables, nuts, seeds, and mixtures thereof, such as triglycerides.

Suitable low PCA oils include those having a polycyclic aromatic content of less than 3 wt. %, as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom. Exemplary petroleum-sourced low PCA oils include mild extraction solvates (MES), treated distillate aromatic extracts (TDAE), Treated Residual Aromatic Extracted Solvents (TRAE), and heavy naphthenics. Exemplary MES oils are available commercially as CATENEX^{™} SNR from Shell, PROREX^{™} 15 and FLEXON^{™} 843 from ExxonMobil, and VIVATEC^{™} 200 from H&R Group. Exemplary TDAE oils are available as TYREX^{™} 20 from ExxonMobil, and VIVATEC^{™} 500 and VIVATEC^{™} 180 from H&R Group. Exemplary heavy naphthenic oils are available as SHELLFLEX^{™} 794 from Shell, and HYPRENE^{™} Black Oil from Ergon.

Exemplary plant-sourced oils include soy or soybean oil, sunflower oil (including high oleic sunflower oil), safflower oil, corn oil, linseed oil, cotton seed oil, rapeseed oil, cashew oil, sesame oil, camellia oil, jojoba oil, macadamia nut oil, coconut oil, and palm oil.

Exemplary ether plasticizers include polyethylene glycols and polypropylene glycols, including triesters and diesters of carboxylic acid, phosphoric acid, or sulphonic acid, and mixtures of these triesters. Exemplary carboxylic acid ester plasticizers include compounds selected from the group consisting of trimellitates, pyromellitates, phthalates, 1,2-cyclohexanedicarboxylates, adipates, azelates, sebacates, glycerol triesters, and mixtures thereof. Exemplary glycerol triesters include those which include at least 50 wt. % by weight, or at least 80 wt. % of an unsaturated C18 fatty acid (e.g., oleic acid, linoleic acid, linolenic acid, and mixtures thereof). Other exemplary carboxylic acid ester plasticizers include stearic acid esters, ricinoleic acid esters, phthalic acid esters (e.g., di-2-ethylhexyl phthalate and diisodecyl phthalate), isophthalic acid esters, tetrahydrophthalic acid esters, adipic acid esters (e.g., di(2-ethylhexyl)adipate and diisooctyl adipate), malic acid esters, sebacic acid esters (e.g., di(2-ethylhexyl)sebacate and diisooctyl sebacate), and fumaric acid esters.

Exemplary phosphate plasticizers include those with a tri-hydrocarbyl phosphate or di-hydrocarbyl phosphate structure, where each hydrocarbyl is independently selected from C₁ to C₁₂ alkyl groups and substituted and un-substituted C₆ to C₁₂ aromatic groups. Specific examples of phosphate plasticizers include trimethyl phosphate, triethyl phosphate, tributyl phosphate, trioctyl phosphate, dioctyl phosphate, 2-ethylhexyl diphenyl phosphate, tributoxyethyl phosphate, triphenyl phosphate, cresyl diphenyl phosphate, isodecyl diphenyl phosphate, tricresyl phosphate, tritolyl phosphate, trixylenyl phosphate, tris(chloroethyl) phosphate, and diphenyl mono-o-xenyl phosphate.

Exemplary sulfonate plasticizers include sulfonic acid esters, such as sulfone butylamide, toluenesulfonamide, N-ethyl-toluenesulfonamide, and N-cyclohexyl-p-toluenesulfonamide.

The Tg of the oil or oils used may be in the range of -40°C to -100°C.

In some embodiments, the total amount of hydrocarbon resin and liquid plasticizer in the uncured rubber composition is at least 30 phr, or at least 40 phr, or up to 110 phr, or up to 85 phr, or up to 70 phr, or up to 65 phr.

### b) Wax

Suitable waxes include microcrystalline waxes, and may be of the type shown in The Vanderbilt Rubber Handbook (1978), Pages 346 and 347. Such waxes may also serve as antiozonants. Typical amounts of waxes are 0 to 5 phr, or at least 0.5 phr, or at least 1 phr, or up to 3 phr.

### c) Resin

The rubber composition may include at least 2 phr, or at least 5 phr, or up to 20 phr, or up to 15 phr, or up to 12 phr of one or more resins. Example resins which may be used in the rubber composition include hydrocarbon resins, tackifying resins, such as unreactive phenol formaldehyde, and stiffness resins, such as reactive phenol formaldehyde resins and resorcinol or resorcinol and hexamethylene tetramine, which together may be used at 1 to 10 phr, with a minimum tackifier resin, if used, being 1 phr and a minimum stiffness resin, if used, being 3 phr.

Example hydrocarbon resins include aromatic, aliphatic, and cycloaliphatic resins. The hydrocarbon resin may have a Tg of at least 30°C, or up to 50°C. Hydrocarbon resin Tg can be determined by DSC, according to the procedure discussed above for elastomer Tg measurements. The hydrocarbon resin may have a softening point of at least 70°C, or up to 100°C. The softening point of a hydrocarbon resin is generally related to the Tg. The Tg is generally lower than its softening point, and the lower the Tg the lower the softening point.

Examples of aliphatic resins include C5 fraction homopolymer and copolymer resins. Examples of cycloaliphatic resins include cyclopentadiene ("CPD") homopolymer or copolymer resins, dicyclopentadiene ("DCPD") homopolymer or copolymer resins, and combinations thereof.

Examples of aromatic resins include aromatic homopolymer resins and aromatic copolymer resins. An aromatic copolymer resin refers to a hydrocarbon resin which comprises a combination of one or more aromatic monomers in combination with one or more other (non-aromatic) monomers, with the majority by weight of all monomers generally being aromatic. The aromatic resin may have a Mw of at least 1000 grams/mole and/or up to 4000 grams/mole.

Specific examples of aromatic resins include coumarone-indene resins, alkylphenol resins, and vinyl aromatic homopolymer or copolymer resins. Examples of alkylphenol resins include alkylphenol-acetylene resins such as p-tert-butylphenol-acetylene resins, alkylphenol-formaldehyde resins (such as those having a low degree of polymerization). Vinyl aromatic resins may include one or more of the following monomers: alpha-methylstyrene, styrene, ortho-methylstyrene, meta-methylstyrene, para-methylstyrene, vinyltoluene, para(tert-butyl)styrene, methoxystyrene, chlorostyrene, hydroxystyrene, vinylmesitylene, divinylbenzene, vinyl naphthalene and the like. Examples of vinylaromatic copolymer resins include vinylaromatic/terpene copolymer resins (e.g., limonene/styrene copolymer resins), vinylaromatic/C5 fraction resins (e.g., C5 fraction/styrene copolymer resin), vinylaromatic/aliphatic copolymer resins (e.g., CPD/styrene copolymer resin, and DCPD/styrene copolymer resin).

In the case of an aromatic resin based upon one or more of the above-mentioned vinyl aromatic monomers (e.g., styrene, alpha-methylstyrene), at least 80% by weight, or at least 85% by weight, or at least 90% by weight, or at least 95% by weight, or up to 100% by weight of the monomers in the aromatic resin may be aromatic monomers.

Other aromatic resins include terpene resins, such as alpha-pinene resins, beta-pinene resins, limonene resins (e.g., L-limonene, D-limonene, dipentene which is a racemic mixture of L- and D-isomers), beta-phellandrene, delta-3-carene, delta-2-carene, and combinations thereof.

In one embodiment, the hydrocarbon resin includes a combination of aromatic and aliphatic/cycloaliphatic hydrocarbons. In such cases, the total amount of any aliphatic and/or cycloaliphatic resin used in combination with the aromatic resin may be no more than 5 phr, or less than 4 phr, or less than 3 phr, or more than 20% by weight, or no more than 15% or no more than 10% by weight of the overall amount of hydrocarbon resins).

### 5. Cure package

The exemplary cure package includes a) a sulfur-based curing agent; b) an activator selected from inorganic activators, such as zinc oxide, organic activators, such as fatty acids, and combinations thereof, c) a cure accelerator, and optionally a cure retardant.

### a) Curing agent

The vulcanization of the rubber composition is conducted in the presence of a sulfur-based curing (vulcanizing) agent.

Examples of suitable sulfur-based curing agents include elemental sulfur (free sulfur), insoluble polymeric sulfur, soluble sulfur, and sulfur donating curing agents, for example, an amine disulfide, polymeric polysulfide, or sulfur olefin adduct, and mixtures thereof.

Sulfur-based curing agents may be used in an amount of from 0.1 to 10 phr, or at least 0.5 phr, or at least 1 phr, or up to 8 phr, or up to 5 phr, or up to 2 phr, depending, in part, on the desired stiffness of the cured rubber composition.

### b) Cure Accelerators, Activators, and Retardants

Cure accelerators and cure activators act as catalysts for the vulcanizing agent.

Accelerators are used to control the time and/or temperature required for vulcanization and to improve the properties of the cured rubber composition. The amount of the cure accelerator may be from 0.1 to 10 phr, or at least 0.5 phr, or at least 1 phr, or at least 2 phr, or up to 6 phr.

In one embodiment, a single accelerator system may be used, i.e., primary accelerator. A primary accelerator may be used in amounts ranging from 0.5 to 3 phr. In another embodiment, combinations of two or more accelerators may be used, such as a primary accelerator and a secondary accelerator. Combinations of such accelerators have historically been known to produce a synergistic effect of the final properties of sulfur-cured rubbers and are often somewhat better than those produced by use of either accelerator alone. In addition, a delayed action accelerator(s) may be used as the secondary accelerator. These are less affected by normal processing temperatures but produce satisfactory cures at ordinary curing temperatures.

Representative examples of accelerators include amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound, although a second sulfenamide accelerator may be used.

Examples of such accelerators include thiazole cure accelerators, such as 2-mercaptobenzothiazole, 2,2'-dithiobis(benzothiazole) (MBTS), N-cyclohexyl-2-benzothiazole-sulfenamide (CBS), and N-tert-butyl-2-benzothiazole-sulfenamide (TBBS), guanidine cure accelerators, such as diphenyl guanidine (DPG), and mixtures thereof. In tread compositions, thiuram accelerators may be omitted.

Cure (vulcanizing) activators are additives used to support vulcanization. Generally, cure activators include both an inorganic component and an organic component. Zinc oxide is the most widely used inorganic cure activator. Organic cure activators include fatty acids and their salts, such as fatty acids containing a C10, or higher alkyl group. Examples include stearic acid, palmitic acid, lauric acid, zinc salts of each of the foregoing, and thiourea compounds, e.g., thiourea, and dihydrocarbylthioureas such as dialkylthioureas and diarylthioureas, and mixtures thereof. The total amount of cure activator may be from 0.1 to 16 phr, or at least 0.5 phr, or at least 1 phr, or up to 10 phr, or up to 8 phr. Inorganic cure activators, such as zinc oxide, may be at least 1 phr, or at least 2 phr, or up to 8 phr, or up to 4 phr, or up to 3 phr. Organic cure activators, such as fatty acids, where used, may be at least 1 phr, or at least 2 phr, or up to 8 phr, or up to 6 phr, or up to 5 phr, or up to 4 phr.

Cure retardants are used to control the cure process and generally retard or inhibit curing until a desired time and/or temperature is reached. Example cure retardants include cyclohexylthiophthalimide.

The amount of cure inhibitor, when used may be 0.1 to 3 phr, or 0.5 to 2 phr.

### 6. Antioxidants, antiozonants, antidegradants and peptizers

The rubber composition may include 1 phr to 10 phr of antiozonants, antidegradants, and/or antioxidants. These compounds assist in protecting the tire against oxidation and ozonation. Representative antidegradants include monophenols, bisphenols, thiobisphenols, polyphenols, hydroquinone derivatives, phosphites, phosphate blends, thioesters, naphthylamines, diphenol amines as well as other diaryl amine derivatives, para-phenylene diamines, quinolines, and blended amines. Exemplary amine-based antioxidants include diphenyl-p-phenylenediamine and others, such as those disclosed in The Vanderbilt Rubber Handbook (1978), pages 344 346.

Typical amounts of peptizers are 0.1 to 1 phr.

As an example, a rubber composition may contain about 40 ± 5 phr of polybutadiene, 60 ± 5 phr of styrene-butadiene rubber, 0 - 5 phr of natural rubber, 100 ± 10 phr of reinforcing silica filler, 8 ± 5 phr carbon black, 9 ± 5 phr organosilane coupling agent.

Examples of rubber compositions which can be prepared are shown in Table 1.

**TABLE 1: Illustrative rubber compositions**

| **Ingredient** | **Example A (phr)** | **Example B (phr)** |
|---|---|---|
| Polybutadiene | 30 - 50 | 35 - 45 |
| Styrene butadiene rubber, e.g., ESBR | 70 - 50 | 65 - 55 |
| Processing oil, including any extender oil and any additional oil (e.g., mineral oil) | 10 - 85 | 35 - 65 |
| Aluminum hydroxide | 10 - 20 | 12 - 18 |
| Carbon black | 0 - 20 | 2 - 12 |
| Silica | 70 - 130 | 90 - 110 |
| Organosilane coupling agent | 3 - 20 | 5 - 12 |
| Wax, e.g., Paraffinic and/or microcrystalline | 0 - 5 | 0.5 - 3 |
| Resin | 2 - 20 | 5 - 15 |
| Organic Activator, e.g., Fatty acid | 1 - 8 | 2 - 6 |
| Inorganic Activator, e.g., Zinc Oxide | 1.0 - 8 | 1 - 4 |
| Antidegradant | 0 - 2 | 0.01 - 1.0 |
| Sulfur-based curing agent | 0.8 - 4.0 | 1.0 - 3.0 |
| Accelerators | 1.0 - 6.0 | 3.0 - 6.0 |
| Total phr | 200- 420 | 250 - 352 |

### Preparing the Rubber Composition

To form a cured rubber composition, one or more non-productive mixing stages is/are followed by a productive mixing stage, and finally a vulcanization (curing) stage, in which the rubber composition is cured, e.g., to form a shaped product, such as a tire tread, or other tire component.

The non-productive stage(s) are intended to mix the elastomers and other rubber forming additives (as exemplified above, but excluding at least the curing agent and optionally any accelerator(s) and/or activator(s)).

Mixing may be performed, for example, by kneading the ingredients together in a Banbury mixer or on a milled roll. The term non-productive stage refers to a mixing stage (or stages) where no curing agents and generally no cure accelerators are added. The term final productive mixing stage refers to the mixing stage where the curing agents and cure accelerators are added into the rubber composition.

The non-productive stage(s) may be conducted at a temperature of 130°C to 200°C, with the mixture being allowed to cool between each of the non-productive stages. The number of non-productive stages may depend on the amount of filler(s) to be incorporated, with higher filler amounts generally involving a greater number of non-productive stages, e.g., up to three, or in some cases, four or more. The coupling agent may be incorporated into the mixture in one of the non-productive stages, such as the last. Once the cure package is added, the final mixing stage may be carried out a temperature below the cure temperature, and//or for a short period of time, in order to avoid unwanted pre-cure of the rubber composition, e.g., no more than 120°C, such as 40°C to 120°C, or 100°C to 115°C, for one to three minutes.

### Tire Tread Properties

The rubber composition is particularly suited to use in on-the-road vehicle tires, such as tires intended for winter use on high performance cars. The use of the tire tread rubber composition in vehicle tires may result in a tire having improved or desirable properties. These improved or desirable properties include improved wet traction, while maintaining snow or ice traction and dry handling.

**TABLE 2: Rubber Compositions**

| **Ingredient** | **Example 1, phr** | **Example 2, phr** |
|---|---|---|
| Polybutadiene¹ | 40 | 40 |
| Emulsion Polymerized styrene butadiene rubber² | 60 | 60 |
| Carbon black³ | 8 | 8 |
| Carbon black as support for Coupling agent | 1 | 1 |
| Silica⁴ | 100 | 100 |
| Mineral oil in oil-extended ESBR | 22.5 | 22.5 |
| Additional Mineral oil⁵ | 28 | 28 |
| Organosilane coupling agent ⁶ | 8 | 8 |
| Organosilane Coupling Agent⁷ | 1 | 1 |
| Aluminum hydroxide⁸ | 0 | 15 |
| Fatty acid Activator⁹ | 3 | 3 |
| Paraffinic wax | 1.5 | 1.5 |
| Antidegradant¹⁰ | 0.5 | 0.5 |
| Resin¹¹ | 8 | 8 |
| Inorganic activator, zinc oxide | 2.5 | 2.5 |
| Sulfur¹² | 1.7 | 1.7 |
| Accelerators¹³ | 4.2 | 4.2 |

| | | |
|---|---|---|
| ¹ Polybutadiene elastomer obtained as Budene^{®}1208 from The Goodyear Tire & Rubber Company, with a Mooney viscosity ML1+4 @ 100°C of 46. ²Oil extended ESBR, obtained as BUNA^{™}SB 1723, from SYNTHOS, which includes 23.5% bound styrene, and is plasticized with TDAE oil (27.0% TDAE, separately itemized in Table 2), with a Mooney viscosity ML1+4 @ 100°C of 49. ³ASTM Grade N134 carbon black. ⁴ Precipitated amorphous silica having a BET nitrogen surface area of about 165 m²/g and a CTAB surface area of about 160 m²/g, obtained as Zeosil^{™} 1165 MP from Solvay. ⁵Treated Distillate Aromatic Extract (TDAE), aromatic mineral oil. ⁶ Bis-[3-(triethoxysilyl)propyl]disulfide (TESPD) with an average of 2.15 connecting sulfur atoms in the polysulfidic bridge, obtained as Si266^{®} from Evonik Industries. ⁷Bis-[3-(triethoxysilyl)propyl] tetrasulfide (TESPT), obtained as a 50:50 mixture, by weight, with carbon black, ASTM grade N330 (separately itemized in Table 2), obtained as X50S^{™} from Evonik. ⁸Al(OH)₃ obtained as Hydral^{™} 710 from Huber, with BET surface area = 4.0 m²/g, d₅₀ = 1.1 microns, d₁₀ = 0.7 microns, density = 2.42 g/cm³. ⁹ Mixture of fatty acids, predominantly stearic acid. ¹⁰ Diaryl p-phenylenediamine. ¹¹Alpha-methylstyrene resin. ¹² Elemental sulfur ¹³ Approximately equal mixture of N-cyclohexyl benzothiazole-2-sulfenamide (CBS) and N,N'-diphenyl guanidine (DPG). | | |

### Evaluation of Rubber Compositions

Various tests are performed on tires intended for on-the-road use having a tread formed of the rubber compositions of Examples 1 and 2. Cars fitted with the tires were driven around a racetrack in wet, dry, and snowy conditions. The results for Example 2 in Table 3 are expressed with reference to results for Example 1. Thus, a result of 100 indicates that the tire performed comparably to the existing tread composition while values of greater than 100 indicate an improvement. The time rating is based on the time taken for completion of a lap of the racetrack.

Abrasion resistance is determined according to DIN 53516, using a Zwick drum abrasion unit, model 6102 normalized to Example 1, wherein larger values correspond to less abrasion.

Rolling resistance is based on the rolling resistance coefficient (RRC), determined according to SAE J2452.

**TABLE 3: Test Results**

| | **Example 1** | **Example 2** |
|---|---|---|
| **WET** | | |
| Braking | 100 | 100 |
| Handling | 100 | 101 |
| Time rating | 103 | 106 |

| **DRY** | | |
|---|---|---|
| Handling | 100 | 101 |
| Braking | 100 | 101 |

| **SNOW** | | |
|---|---|---|
| Handling | 100 | 100 |
| Time Rating | 100 | 100 |
| Braking | 100 | 100 |
| Acceleration | 100 | 101 |

| **ENVIRONMENT** | | |
|---|---|---|
| Abrasion Resistance | 100 | 80 |
| Rolling Resistance | 100 | 100 |

The results suggest that by adding aluminum hydroxide to a tread composition (as in Example 2), the wet handling of tires can be improved, without a noticeable loss in snow or dry performance. While both tire tread compositions showed some loss in treadwear, as compared to the existing tire, this is considered an acceptable amount for tires intended for winter use, since the existing tire has a long useful life.

Each of the documents referred to above is incorporated herein by reference. Except in the Examples, or where otherwise explicitly indicated, all numerical quantities in this description specifying amounts of materials, reaction conditions, molecular weights, number of carbon atoms, and the like, are to be understood as modified by the word "about." Unless otherwise indicated, each chemical or composition referred to herein should be interpreted as being a commercial grade material which may contain the isomers, by-products, derivatives, and other such materials which are normally understood to be present in the commercial grade. However, the amount of each chemical component is presented exclusive of any solvent or diluent oil, which may be customarily present in the commercial material, unless otherwise indicated. It is to be understood that the upper and lower amount, range, and ratio limits set forth herein may be independently combined. Similarly, the ranges and amounts for each element of the invention may be used together with ranges or amounts for any of the other elements.

## Claims

1. A rubber composition comprising, expressed as parts by weight per hundred parts of rubber (phr):
100 phr of an elastomer component, the elastomer component comprising a polybutadiene rubber and a styrene butadiene rubber;
a filler component comprising at least 10 phr aluminum hydroxide, at least 70 phr silica and 0 to 20 phr carbon black;
an organosilane coupling agent;
one or more processing aids selected from the group consisting of a liquid plasticizer, a wax, a resin and mixtures thereof;
and a cure package comprising a sulfur-based curing agent, an activator selected from inorganic activators, organic activators, and combinations thereof, and a cure accelerator.

2. The rubber composition of claim 1, wherein the polybutadiene rubber is at least 30 phr and/or wherein the styrene butadiene rubber is at least 50 phr.

3. The rubber composition of claim 1 or 2, wherein a ratio by weight of polybutadiene rubber to styrene butadiene rubber is in a range of from 1:1 to 1:3.

4. The rubber composition of at least one of the previous claims, wherein the aluminum hydroxide is up to 20 phr; and/or wherein the carbon black is at least 5 phr.

5. The rubber composition of at least one of the previous claims, wherein the organosilane coupling agent is at least 0.1 phr; and/or wherein a ratio by weight of the organosilane coupling agent to silica is at least 0.1:100.

6. The rubber composition of at least one of the previous claims, wherein the organosilane coupling agent comprises at least one bis-[3-(trialkoxysilyl)organyl]polysulfide.

7. The rubber composition of at least one of the previous claims, wherein the liquid plasticizer comprises at least 10 phr, or at least 20 phr of an oil; and/or wherein the resin is at least 2 phr, or at least 5 phr, or up to 20 phr, or up to 15 phr, or up to 12 phr.

8. The rubber composition of at least one of the previous claims, wherein the resin comprises an alpha-methylstyrene resin.

9. The rubber composition of at least one of the previous claims, wherein the sulfur-based curing agent is at least 0.1 phr.

10. The rubber composition of at least one of the previous claims, wherein the inorganic activator comprises zinc oxide and/or wherein the organic activator comprises a fatty acid.

11. The rubber composition of at least one of the previous claims, comprising, expressed as parts by weight per hundred parts of rubber (phr):
100 phr of an elastomer component, the elastomer component comprising of from 30 to 50 phr of a polybutadiene rubber, and from 50 to 70 phr of a styrene butadiene rubber;
10-20 phr of aluminum hydroxide;
70-130 phr of silica;
0-20 phr of carbon black;
3-20 phr of an organosilane coupling agent;
10-85 phr of processing oil;
0-5 phr of wax;
2-20 phr of resin;
0.8-4 phr of a sulfur-based curing agent,
1-8 phr of zinc oxide;
1-8 phr of fatty acid or 2 to 20 phr of fatty acid; and
1-6 phr of a cure accelerator.

12. A tire tread comprising or formed from the rubber composition of at least one of the previous claims.

13. A tire, preferably a passenger vehicle tire, comprising tire tread of claim 12.

14. A method of forming a tire tread, the method comprising forming a rubber composition by blending:
100 phr of an elastomer component, the elastomer component comprising a) polybutadiene rubber, and b) a styrene butadiene rubber;
a filler component comprising a) at least 10 phr aluminum hydroxide, b) at least 70 phr silica, and c) 0-20 phr carbon black;
an organosilane coupling agent;
one or more processing aids, selected from the group consisting of: a) a liquid plasticizer, b) a wax, c) a resin, and mixtures thereof; and
a cure package comprising: a) a sulfur-based curing agent, b) an activator selected from inorganic activators, organic activators, and combinations thereof, and c) a cure accelerator; and
curing the rubber composition to form the tire tread.
